# EUROPÄISCHE PATENTANMELDUNG

(11) **EP 4 667 668 A1**
(43) Veröffentlichungstag der Anmeldung: **24.12.2025**
(21) Anmeldenummer: 25182727.5
(22) Anmeldetag: 13.06.2025
(51) Int. Cl.: E03C 1/04, B29C 44/00, B29C 45/00

(54) **VERFAHREN ZUR HERSTELLUNG EINES ARMATURENGEHÄUSES FÜR EINE SANITÄRARMATUR UND SANITÄRARMATUR MIT EINEM ARMATURENGEHÄUSE**

(30) Priorität: 19.06.2024 DE 102024117332
(71) Anmelder: Grohe AG, 58675 Hemer (DE)
(72) Erfinder: Romanowski, Dr. Carsten, 58638 Iserlohn (DE)

(57) **Zusammenfassung**

Verfahren zur Herstellung eines Armaturengehäuses (1) für eine Sanitärarmatur (2), zumindest aufweisend die folgenden Schritte:
a) Bereitstellen einer Mehrzahl von Funktionskomponenten (3.1, ..., 3.4) für die Sanitärarmatur (2);
b) Verbinden der Mehrzahl von Funktionskomponenten (3.1, ..., 3.4) mit zumindest einem Verbindungselement (8), wobei das Verbindungselement (8) eine Halteklammer oder eine Halteschale ist; und
c) Erzeugen des Armaturengehäuses (1) durch zumindest teilweises Umgießen der Funktionskomponenten (3.1, ... 3.4) und des zumindest einen Verbindungselements (8).

Zudem wird eine Sanitärarmatur (2) mit einem Armaturengehäuse (1) vorgeschlagen.

## Beschreibung

Die vorliegende Erfindung betrifft ein Verfahren zur Herstellung eines Armaturengehäuses für eine Sanitärarmatur sowie eine Sanitärarmatur mit einem Armaturengehäuse. Mit derartigen Sanitärarmaturen ist insbesondere eine Flüssigkeit an einem Waschbecken, einem Spülbecken, einer Dusche und/oder einer Badewanne bedarfsgerecht abgebbar.

Sanitärarmaturen können insbesondere dem Mischen von Kaltwasser und Warmwasser zu Mischwasser mit einer gewünschten Mischwassertemperatur sowie der Dosierung des gemischten Mischwassers dienen. Bei bekannten Sanitärarmaturen wird das Mischwasser von einer Mischkartusche über Fluidkanäle in einem Armaturengehäuse der Sanitärarmatur zu einer Auslauföffnung eines Auslaufs des Armaturengehäuses geleitet. Da das Wasser dabei mit dem Armaturengehäuse in Kontakt steht, müssen Armaturengehäuse aus einem für Trinkwasser geeigneten und nicht-korrosionsanfälligen Material, wie zum Beispiel Messing, bestehen.

Um kostengünstigere Materialien, wie zum Beispiel Kunststoff, für Armaturengehäuse verwenden zu können, sind bereits Sanitärarmaturen bekannt, bei denen die Fluidkanäle in dem Armaturengehäuse als Funktionskomponenten nach Art von Kunststoffeinsätzen ausgebildet sind. Die Kunststoffeinsätze verhindern einen Kontakt des Mischwassers mit dem Armaturengehäuse. Zudem ist es bekannt Armaturengehäuse (insbesondere vollständig) aus Kunststoff herzustellen. Eine nachträgliche Montage von Funktionskomponenten in einteiligen Armaturengehäusen bzw. in Vollformarmaturen ist häufig aufgrund von Platzmangel schwierig. Daher können Armaturengehäuse aus Kunststoff zweischalig ausgeführt werden, was jedoch einen Montageaufwand erhöht und ein Design der Armaturengehäuse negativ beeinflussen kann.

Aufgabe der Erfindung ist es daher, die mit Bezug auf den Stand der Technik geschilderten Probleme zumindest teilweise zu lösen und insbesondere ein Verfahren zur Herstellung eines Armaturengehäuses für eine Sanitärarmatur anzugeben, durch das Armaturengehäuse mit geringem Aufwand herstellbar sind. Zudem soll auch eine Sanitärarmatur angegeben werden, deren Armaturengehäuse mit geringem Aufwand herstellbar ist.

Diese Aufgaben werden gelöst mit einem Verfahren und einer Sanitärarmatur gemäß den Merkmalen der unabhängigen Patentansprüche. Weitere vorteilhafte Ausgestaltungen der Erfindung sind in den abhängigen Patentansprüchen angegeben. Es ist darauf hinzuweisen, dass die in den abhängigen Patentansprüchen einzeln aufgeführten Merkmale in beliebiger technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein Verfahren zur Herstellung eines Armaturengehäuses für eine Sanitärarmatur bei, das zumindest die folgenden Schritte aufweist:
a) Bereitstellen einer Mehrzahl von Funktionskomponenten für die Sanitärarmatur;
b) Verbinden der Mehrzahl von Funktionskomponenten mit zumindest einem Verbindungselement, wobei das Verbindungselement eine Halteklammer oder eine Halteschale ist; und
c) Erzeugen des Armaturengehäuses durch zumindest teilweises Umgießen der Mehrzahl von Funktionskomponenten und des zumindest einen Verbindungselements.

Die Sanitärarmatur dient insbesondere dem Mischen von Kaltwasser und Warmwasser zu Mischwasser mit einer gewünschten Mischwassertemperatur und/oder der Dosierung des gemischten Mischwassers. Bei der Sanitärarmatur kann es sich um eine Vollkunststoffarmatur handeln. Solche Sanitärarmaturen werden regelmäßig für Spülbecken, Waschbecken, Duschen und/oder Badewannen verwendet. Ein Armaturengehäuse der Sanitärarmatur kann einen eine Auslauföffnung aufweisenden Auslauf aufweisen. Das Armaturengehäuse ist an einem Träger, beispielsweise einer Arbeitsplatte, dem Spülbecken, dem Waschbecken, der Dusche, der Badewanne oder einer Wand, befestigbar. Der (hervorstehende bzw. abzweigende) Auslauf kann starr oder bewegbar mit dem Armaturengehäuse verbunden und/oder zumindest teilweise rohrförmig ausgebildet sein. Das Armaturengehäuse kann eine dekorative äußere Oberfläche bzw. Außenfläche aufweisen. Der Auslauf kann eine Auslauföffnung aufweisen, über die eine Flüssigkeit, insbesondere (Misch-)Wasser, abgebbar ist.

In einem Schritt a) wird eine Mehrzahl von Funktionskomponente für die Sanitärarmatur bereitgestellt. Die Funktionskomponenten können miteinander verbunden, ineinandergesteckt und/oder zumindest teilweise aneinander befestigt sein. Bei zumindest einer Funktionskomponente kann es sich insbesondere um eine Komponente zum Führen der Flüssigkeit in dem Armaturengehäuse, zum Steuern einer Eigenschaft der Flüssigkeit und/oder zum Mischen der Flüssigkeit handeln. Die Funktionskomponenten können zumindest teilweise aus Kunststoff und/oder Metall bestehen. Die Funktionskomponenten können zumindest teilweise als Kunststoffspritzgussteil ausgebildet sein. Bei der Mehrzahl von Funktionskomponenten kann es sich um eine Mehrzahl von Flüssigkeitsführungen bzw. Wasserwege handeln.

In einem Schritt b) werden die Funktionskomponenten mit zumindest einem Verbindungselement miteinander verbunden. Die Funktionskomponenten werden mit dem zumindest einen Verbindungselement insbesondere derart miteinander verbunden, dass sich die Funktionskomponenten nicht (ungewollt) voneinander lösen können. Das zumindest eine Verbindungselement besteht zumindest teilweise aus Kunststoff. Bei dem zumindest einen Verbindungselement handelt es sich um eine Halteklammer, beispielsweise nach Art eines Exoskeletts oder Clips, und/oder eine Halteschale. Die Halteklammer kann eine Mehrzahl von Streben und/oder Klammerabschnitten für die Funktionskomponenten aufweisen. Je Funktionskomponente kann die Halteklammer zumindest einen Klammerabschnitt aufweisen. Die Klammerabschnitte können an eine Außenkontur der Funktionskomponenten angepasst sein. Die Halteklammer kann bzw. die Klammerabschnitte können, insbesondere von außen, auf die Funktionskomponenten gesteckt werden. Die Halteklammer kann reibschlüssig oder formschlüssig mit den Funktionskomponenten verbunden werden. Die Halteklammer kann mit den Funktionskomponenten beispielsweise über eine Steckverbindung und/oder eine Rastverbindung verbunden werden. Die Halteschale kann schalenförmig ausgebildet sein. Die Halteschale kann eine Innenkontur aufweisen, die zumindest teilweise an die Außenkontur der Funktionskomponenten angepasst ist. Die Funktionskomponenten werden in Schritt b) insbesondere in die Halteschale gelegt. Die Funktionskomponenten werden in der Halteschale insbesondere derart angeordnet, dass sich die Funktionskomponenten nicht (ungewollt) voneinander lösen können. In Schritt b) können alle Funktionskomponenten mit dem zumindest einen Verbindungselement oder mit einem einzigen Verbindungselement miteinander verbunden werden. Nach Schritt b) werden die Funktionskomponenten beispielsweise in einem Hohlraum eines Spritzgießwerkzeugs angeordnet. Der Hohlraum bildet insbesondere ein Negativ einer Außenkontur des Armaturengehäuses. Das zumindest eine Verbindungselement kann verhindern, dass sich die Funktionskomponenten beim Transport in den Hohlraum und/oder in dem Hohlraum (ungewollt) voneinander lösen.

In einem Schritt c) wird das Armaturengehäuse durch zumindest teilweises oder vollständiges Umgießen der Funktionskomponenten und des Verbindungselements erzeugt. Das Umgießen kann mit Kunststoff erfolgen. Das Umgießen kann beispielsweise mittels Kunststoffspritzgießen oder Thermoplast-Schaumspritzgießen (TSG) erfolgen. Bei Thermoplast-Schaumspritzgießen handelt es sich um eine Sonderform des Kunststoffspritzgießens, bei dem ein thermoplastischer Kunststoff in dem Hohlraum des Spritzgießwerkzeugs aufschäumt. Hierzu wird einem Kunststoffgranulat ein Treibmittel zugesetzt, das beim Schmelzen des Kunststoffs in dem Spritzgießwerkzeug und/oder in einer Spritzgießmaschine aktiviert wird. Das Treibmittel wird beim Schmelzen des Kunststoffs insbesondere thermisch zersetzt und in gasförmige Bestandteile aufgelöst, wodurch das Aufschäumen der Schmelze bewirkt wird. Das zumindest eine Verbindungselement hält die Funktionskomponenten beim Umgießen zusammen bzw. in ihrer Position.

Beim Umgießen der Funktionskomponenten verhindert das zumindest eine Verbindungselement, dass sich die Funktionskomponenten (ungewollt) voneinander lösen und/oder ihre Position ändern. Das zumindest eine Verbindungselement kann die Funktionskomponenten beim Umgießen zueinander stabil halten. Das zumindest eine Verbindungselement kann beim Umgießen thermosensitive Dichtungen der Funktionskomponenten schützen. Durch das Umgießen der Funktionskomponenten und des zumindest einen Verbindungselements können die Funktionskomponenten und das zumindest eine Verbindungselement zumindest teilweise in dem Armaturengehäuse bzw. in dem Material des Armaturengehäuses eingebettet sein. Dies kann beispielsweise bedeuten, dass eine Innenfläche des Armaturengehäuses (unmittelbar) die Funktionskomponenten und/oder das zumindest eine Verbindungselement umgibt und/oder (vollständig) einer äußeren Fläche der Funktionskomponenten und/oder des zumindest einen Verbindungselements folgt. Alternativ oder kumulativ kann dies insbesondere bedeuten, dass die Funktionskomponenten und/oder das zumindest eine Verbindungselement nicht bewegbar und/oder (ohne eine Zerstörung der Funktionskomponenten, des zumindest einen Verbindungselements und/oder des Armaturengehäuses) nicht aus dem Armaturengehäuse lösbar ist.

Durch das Umgießen kann eine (im Wesentlichen) glatte Innenfläche und/oder Außenfläche bzw. Außenhülle des Armaturengehäuses erzeugt werden. Zwischen der Innenfläche und der Außenfläche bzw. der Außenhülle kann eine Schaumstruktur erzeugt werden. Die Schaumstruktur weist insbesondere eine Vielzahl von Poren auf. Beispielsweise kann die Schaumstruktur 10 bis 1.000 Poren/cm³ [Poren pro Kubikzentimeter] und/oder eine Dichte aufweisen, die beispielsweise 20 % bis 80 % niedriger ist als der beim Thermoplast-Schaumspritzgießen verwendete Kunststoff.

Durch das Thermoplast-Schaumspritzgießen kann im Vergleich zu konventionellen Kunststoffspritzgießen oder einem Umspritzen mit Metall, wie zum Beispiel Zink, aufgrund von niedrigeren Drücken und/oder Temperaturen der Schmelze in dem Spritzgießwerkzeug ein Beschädigen und/oder Zerstören der zumindest einen Funktionskomponente verhindert werden.

Das Armaturengehäuse kann vollständig aus Kunststoff und/oder einstückig bzw. einteilig hergestellt werden, wodurch Trennlinien an einer Außenfläche des Armaturengehäuses vermeidbar sind.

Durch das Thermoplast-Schaumspritzgießen kann das Armaturengehäuse im Vergleich zum klassischen Kunststoffspritzgießen mit größeren Wandstärken und/oder größeren Wandstärkenunterschieden hergestellt werden, wodurch sich seine Festigkeit erhöht.

Durch das Umgießen der Funktionskomponenten ist eine nachträgliche Montage der Funktionskomponenten in dem Armaturengehäuse vermeidbar, sodass sich der Herstellungsaufwand des Armaturengehäuses reduziert.

Bei zumindest einer Funktionskomponente kann es sich um eine Flüssigkeitszuführleitung, eine Flüssigkeitsführung, ein Mischventil, ein Ventil, eine Mischkartusche, einen Kartuschenadapter, eine Dichtung, zumindest einen Strahlbildner, einen Schaft, eine elektronische Komponente und/oder eine elektrische Leitung handeln.

Mittels zumindest einer Flüssigkeitszuführleitung ist dem Mischventil oder der Mischkartusche insbesondere das Kaltwasser und/oder das Warmwasser zuführbar. Die zumindest eine Flüssigkeitszuführleitung kann beispielsweise nach Art eines (flexiblen) Schlauchs oder eines (starren) Rohrs ausgebildet sein.

Die Kartuschenaufnahme bzw. der Kartuschenadapter dient insbesondere der Aufnahme und/oder der Befestigung des Mischventils oder der Mischkartusche. Die Kartuschenaufnahme bzw. der Kartuschenadapter ist zumindest teilweise rohrförmig ausgebildet, sodass das Mischventil oder die Mischkartusche zumindest teilweise in der Kartuschenaufnahme bzw. dem Kartuschenadapter anordenbar ist.

Mittels des Mischventils bzw. der Mischkartusche ist insbesondere Kaltwasser mit einer Kaltwassertemperatur und Warmwasser mit einer Warmwassertemperatur zu Mischwasser mit einer gewünschten Mischwassertemperatur mischbar. Die Kaltwassertemperatur beträgt insbesondere maximal 25 °C (Celsius), bevorzugt 1°C bis 25 °C, besonders bevorzugt 5 °C bis 20 °C und/oder die Warmwassertemperatur insbesondere maximal 90 °C, bevorzugt 25 °C bis 90 °C, besonders bevorzugt 55 °C bis 65 °C. Das Mischventil bzw. die Mischkartusche können insbesondere mittels eines Betätigungshebels der Sanitärarmatur betätigbar sein. Beispielsweise kann mittels des Betätigungshebels die Mischwassertemperatur und/oder eine Abgabemenge des Mischwassers einstellbar sein. Das Mischventil bzw. die Mischkartusche kann beispielsweise nach Art eines Einhebelmischers ausgebildet sein.

Durch die Flüssigkeitsführung, die beispielsweise nach Art eines (flexiblen) Schlauchs oder eines (starren) Rohrs ausgebildet sein kann, ist das Mischwasser insbesondere der Auslauföffnung des Armaturengehäuses bzw. zumindest einem Strahlbildner zuführbar. Mittels des Strahlbildners ist das Mischwasser insbesondere in einer vorgegebenen oder vorgebbaren Strahlart abgebbar. Die Abgabe der Flüssigkeit kann insbesondere mit dem Mischventil, der Mischkartusche oder dem Ventil steuerbar sein.

Durch die Dichtung ist insbesondere eine Verbindung zwischen zwei Funktionskomponenten abdichtbar, sodass keine Flüssigkeit in das Armaturengehäuse austreten kann. Der Schaft kann zumindest teilweise rohrförmig ausgebildet sein. Weiterhin kann der Schaft insbesondere der Befestigung der Sanitärarmatur an dem Träger dienen. Hierzu kann sich der Schaft zumindest teilweise aus dem Armaturengehäuse erstrecken, sodass der aus dem Armaturengehäuse ragende Abschnitt des Schafts in eine Befestigungsöffnung des Trägers steckbar ist. An einem längsseitigen Ende des Schafts kann ein Befestigungselement, beispielsweise nach Art einer Befestigungsmutter, befestigbar sein, mittels dem die Sanitärarmatur an dem Träger befestigbar ist. Die zumindest eine elektronische Komponente kann beispielsweise als Steuerung, Mikrocontroller, Sensor oder Display ausgebildet sein.

In Schritt c) kann das Armaturengehäuse zumindest teilweise aus Acrylnitril-Butadien-Styrol-Copolymere (ABS) hergestellt werden.

In Schritt c) kann eine Außenkontur des Armaturengehäuses erzeugt werden. Dies kann beispielsweise bedeuten, dass in Schritt c) eine Endkontur des Armaturengehäuses erzeugt wird und/oder das Armaturengehäuse in oder nach Schritt c) nicht mit einer weiteren Schicht und/oder einem weiteren Kunststoff umspritzt wird.

In Schritt c) kann das Armaturengehäuse mit einer Wandstärke von 1 mm [Millimeter] bis 50 mm erzeugt werden. Die Wandstärke kann sich insbesondere (orthogonal zu der Außenfläche des Armaturengehäuses) von der Außenfläche des Armaturengehäuses zu der Innenfläche des Armaturengehäuses bemessen.

In Schritt c) kann das Armaturengehäuse derart erzeugt werden, dass zwischen den Funktionskomponenten und dem Armaturengehäuse kein Hohlraum entsteht.

In Schritt c) kann zumindest eine Flüssigkeitsverbindung zwischen den Funktionskomponenten abgedichtet werden. Durch die zumindest eine Flüssigkeitsverbindung ist die Flüssigkeit, das Kaltwasser, das Warmwasser und/oder das Mischwasser beispielsweise von einer ersten Funktionskomponente zu einer zweiten Funktionskomponente leitbar. Die zumindest eine Flüssigkeitsverbindung kann beispielsweise als Verbindungsstelle und/oder Steckverbindung ausgebildet sein. Die zumindest eine Flüssigkeitsverbindung kann unmittelbar und/oder vollständig von dem Armaturengehäuse umgeben sein, sodass keine Flüssigkeit aus der zumindest einen Flüssigkeitsverbindung in das Armaturengehäuse austreten kann.

In einem Schritt c) kann das Armaturengehäuse galvanisiert werden. Beim Galvanisieren kann auf der Außenfläche des Armaturengehäuses insbesondere ein Metall elektrochemisch abgeschieden werden. Beispielsweise kann auf der Außenfläche eine Chromschicht abgeschieden werden. Die Chromschicht kann beispielsweise eine Schichtdicke von 0,1 µm [Mikrometer] bis 5,0 µm aufweisen.

Einem weiteren Aspekt folgend wird auch eine Sanitärarmatur vorgeschlagen, die zumindest Folgendes aufweist:
- eine Mehrzahl von Funktionskomponenten;
- zumindest ein Verbindungselement, das zumindest zwei Funktionskomponenten verbindet, wobei das Verbindungselement eine Halteklammer oder eine Halteschale ist; und
- ein Armaturengehäuse, das zumindest teilweise um die Funktionskomponenten und das zumindest eine Verbindungselement gegossen ist.

Die Sanitärarmatur ist insbesondere nach dem erfindungsgemäßen Verfahren hergestellt. Für weitere Einzelheiten zu der Sanitärarmatur wird vollumfänglich auf die Beschreibung des Verfahrens verwiesen.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile in den Figuren mit denselben Bezugszeichen versehen. Es zeigen schematisch:
- Fig. 1:: Funktionskomponenten für eine Sanitärarmatur in einem Längsschnitt; und
- Fig. 2:: die Sanitärarmatur in einem Längsschnitt.

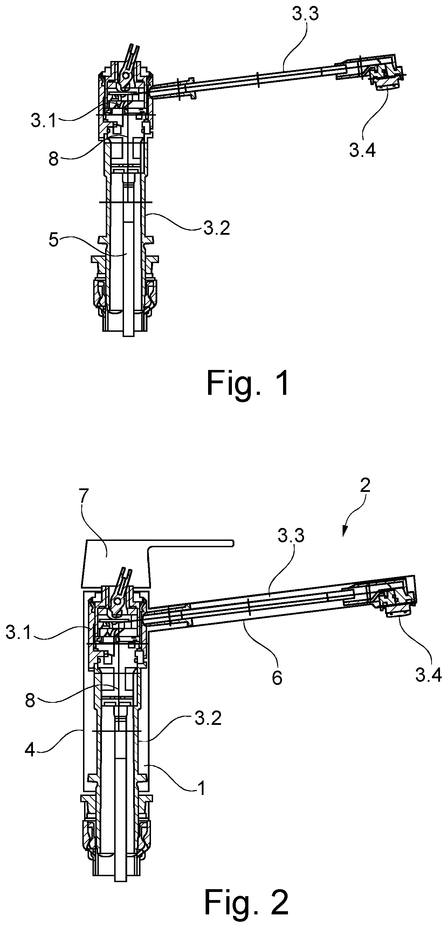

Fig. 1 zeigt Funktionskomponenten 3.1, ..., 3.4 für eine in Fig. 2 gezeigte Sanitärarmatur 2. Bei einer ersten Funktionskomponente 3.1 handelt es sich um eine Mischkartusche, der über zwei Flüssigkeitszuführleitungen 5 (von denen in Fig. 1 nur eine sichtbar ist) Kaltwasser und Warmwasser getrennt zuführbar sind. Die Flüssigkeitszuführleitungen 5 verlaufen durch eine zweite Funktionskomponente 3.2 in Form eines Schafts, der die Mischkartusche und weitere Komponenten für die in der Fig. 2 gezeigte Sanitärarmatur 2 stützt bzw. auf dem die Mischkartusche und die weiteren Komponenten für die Sanitärarmatur 2 angeordnet sind. Der Schaft ist rohrförmig ausgebildet. Mittels der Mischkartusche sind das Kaltwasser und Warmwasser zu Mischwasser mit einer gewünschten Mischwassertemperatur mischbar. Die Mischkartusche ist über eine dritte Funktionskomponente 3.3 in Form einer rohrförmigen Flüssigkeitsführung flüssigkeitsleitend mit einer vierten Funktionskomponente 3.4 in Form eines Strahlbildners verbunden, sodass das Mischwasser nach der Herstellung der in der Fig. 2 gezeigten Sanitärarmatur 2 über den Strahlbildner abgebbar ist. Nachdem in einem Schritt a) die Funktionskomponenten 3.1, ..., 3.4 bereitgestellt wurden, erfolgte in einem Schritt b) die Verbindung der Funktionskomponenten 3.1, ..., 3.4 durch ein Verbindungselement 8. Bei dem Verbindungselement 8 handelt es sich um eine Halteklammer. Das Verbindungselement 8 ist von außen auf die Funktionskomponenten 3.1, ..., 3.4 gesteckt. Die Funktionskomponenten 3.1, ..., 3.4 werden mit dem Verbindungselement 8 zur Herstellung eines in der Fig. 2 gezeigten Armaturengehäuses 1 der Sanitärarmatur 2 in einem Schritt c) in einem hier nicht gezeigten Hohlraum eines Spritzgießwerkzeugs angeordnet, der ein Negativ einer in der Fig. 2 gezeigten Außenkontur 4 des Armaturengehäuses 1 bildet. Das Verbindungselement 8 hält die Funktionskomponenten 3.1, ..., 3.4 in dem Hohlraum des Spritzgießwerkzeugs in ihrer Position.

Fig. 2 zeigt die Funktionskomponenten 3.1, ..., 3.4 mit dem Verbindungselement 8, nachdem diese im Schritt c) zum Erzeugen des Armaturengehäuses 1 der Sanitärarmatur 2 umgossen wurden. Anschließend wurde in einem Schritt c) die Außenkontur 4 bzw. eine Außenfläche 6 des Armaturengehäuses 1 galvanisiert bzw. verchromt. In einem Schritt d) wurde ein Betätigungshebel 7 mit der ersten Funktionskomponente 3.1 bzw. der Mischkartusche verbunden, über den durch einen Benutzer der Sanitärarmatur 2 eine Mischwassertemperatur des Mischwassers und eine Abgabemenge des Mischwassers über die Funktionskomponente 3.4 bzw. den Strahlbildner steuerbar ist.

Das Armaturengehäuse 1 ist mit geringem Aufwand herstellbar.

### Bezugszeichenliste

- 1: Armaturengehäuse
- 2: Sanitärarmatur
- 3.1, ..., 3.4: Funktionskomponente
- 4: Außenkontur
- 5: Flüssigkeitszuführleitung
- 6: Außenfläche
- 7: Betätigungshebel
- 8: Verbindungselement

## Patentansprüche

1. Verfahren zur Herstellung eines Armaturengehäuses (1) für eine Sanitärarmatur (2), zumindest aufweisend die folgenden Schritte:
a) Bereitstellen einer Mehrzahl von Funktionskomponenten (3.1, ..., 3.4) für die Sanitärarmatur (2);
b) Verbinden der Mehrzahl von Funktionskomponenten (3.1, ..., 3.4) mit zumindest einem Verbindungselement (8), wobei das Verbindungselement (8) eine Halteklammer oder eine Halteschale ist; und
c) Erzeugen des Armaturengehäuses (1) durch zumindest teilweises Umgießen der Mehrzahl von Funktionskomponenten (3.1, ... 3.4) und des zumindest einen Verbindungselements (8).

2. Verfahren nach Patentanspruch 1, wobei es sich bei zumindest einer Funktionskomponente (3.1, ... 3.4) um eine Flüssigkeitszuführleitung, eine Flüssigkeitsführung, ein Mischventil, ein Ventil, eine Mischkartusche, einen Kartuschenadapter, eine Dichtung, einen Schaft, eine elektronische Komponente und/oder eine elektrische Leitung handelt.

3. Verfahren nach einem der vorhergehenden Patentansprüche, wobei in Schritt c) das Armaturengehäuse (1) zumindest teilweise aus Acrylnitril-Butadien-Styrol-Copolymere (ABS) hergestellt wird.

4. Verfahren nach einem der vorhergehenden Patentansprüche, wobei in Schritt c) eine Außenkontur (4) des Armaturengehäuses (1) erzeugt wird.

5. Verfahren nach einem der vorhergehenden Patentansprüche, wobei in Schritt c) das Armaturengehäuse (1) mit einer Wandstärke von 1 mm bis 50 mm erzeugt wird.

6. Verfahren nach einem der vorhergehenden Patentansprüche, wobei in Schritt c) das Armaturengehäuse (1) derart erzeugt wird, dass zwischen den Funktionskomponenten (3.1, ... 3.4) und dem Armaturengehäuse (1) kein Hohlraum entsteht.

7. Verfahren nach einem der vorhergehenden Patentansprüche, wobei in Schritt c) zumindest eine Flüssigkeitsverbindung zwischen den Funktionskomponenten (3.1, ... 3.4) abgedichtet wird.

8. Verfahren nach einem der vorhergehenden Patentansprüche, wobei in einem Schritt d) das Armaturengehäuse (1) galvanisiert wird.

9. Sanitärarmatur (2), zumindest aufweisend:
- eine Mehrzahl von Funktionskomponenten (3.1, ..., 3.4);
- zumindest ein Verbindungselement (8), das zumindest zwei Funktionskomponenten (3.1, ..., 3.4) verbindet, wobei das Verbindungselement (8) eine Halteklammer oder eine Halteschale ist; und
- ein Armaturengehäuse (1), das zumindest teilweise um die Funktionskomponenten (3.1, ... 3.4) und das zumindest eine Verbindungselement (8) gegossen ist.
